# EUROPEAN PATENT APPLICATION

(11) **EP 2 375 531 A2**
(43) Date of publication of application: **12.10.2011**
(21) Application number: 11160943.4
(22) Date of filing: 04.04.2011
(51) Int. Cl.: H02J 5/00

(54) **Wireless power receiver and wireless power transmission system**

(30) Priority: 05.04.2010 JP 2010087092; 03.02.2011 JP 2011021954
(71) Applicant: TDK Corporation, Tokyo 103-8272 (JP)
(72) Inventor: Urano, Takashi, Chuo-ku Tokyo 103-8272 (JP)
(74) Representative: Glawe, Delfs, Moll

(57) **Abstract**

Power is fed from a feeding coil L2 to a receiving coil L3. In a wireless power receiver 118, capacitors CA and CB are each charged by received power and function as a DC power source. Meanwhile, a reference signal and an input signal are supplied to a control signal generation circuit 108. Based on the reference signal and input signal, the control signal generation circuit 108 generates a control signal representing the signal level of the input signal by a duty ratio. A voltage waveform of an output voltage V5 at a load LD is controlled by the control signal.

## Description

### BACKGROUND OF THE INVENTION

### --Field of the Invention

The present invention relates to a wireless power receiver for receiving power fed by wireless and a wireless power transmission system.

### --Description of Related Art

A wireless power feeding technique of feeding power without a power cord is now attracting attention. The current wireless power feeding technique is roughly divided into three: (A) type utilizing electromagnetic induction (for short range); (B) type utilizing radio wave (for long range); and (C) type utilizing resonance phenomenon of magnetic field (for intermediate range) .

The type (A) utilizing electromagnetic induction has generally been employed in familiar home appliances such as an electric shaver; however, it can be effective only in a short range of several centimeters. The type (B) utilizing radio wave is available in a long range; however, it cannot feed big electric power. The type (C) utilizing resonance phenomenon is a comparatively new technique and is of particular interest because of its high power transmission efficiency even in an intermediate range of about several meters. For example, a plan is being studied in which a receiving coil is buried in a lower portion of an EV (Electric Vehicle) so as to feed power from a feeding coil in the ground in a non-contact manner. The wireless configuration allows a completely insulated system to be achieved, which is especially effective for power feeding in the rain. Hereinafter, the type (C) is referred to as "magnetic field resonance type".

The magnetic field resonance type is based on a theory published by Massachusetts Institute of Technology in 2006 (refer to Patent Document 1). In Patent Document 1, four coils are prepared. The four coils are referred to as "exciting coil", "feeding coil", "receiving coil", and "loading coil" in the order starting from the feeding side. The exciting coil and feeding coil closely face each other for electromagnetic coupling. Similarly, the receiving coil and loading coil closely face each other for electromagnetic coupling. The distance (intermediate distance) between the feeding coil and receiving coil is larger than the distance between the exciting coil and feeding coil and distance between the receiving coil and loading coil. This system aims to feed power from the feeding coil to receiving coil.

When AC power is fed to the exciting coil, current also flows in the feeding coil according to the principle of electromagnetic induction. When the feeding coil generates a magnetic field to cause the feeding coil and receiving coil to magnetically resonate, large current flows in the receiving coil. At this time, current also flows in the loading coil according to the principle of electromagnetic induction, and power is taken out from a load connected in series to the loading coil. By utilizing the magnetic field resonance phenomenon, high power transmission efficiency can be achieved even if the feeding coil and receiving coil are largely spaced from each other.

### [Citation List]

### [Patent Document]

[Patent Document 1] U.S. Pat. Appln. Publication No. 2008-0278264
[Patent Document 2] Jpn. Pat. Appln. Laid-Open Publication No. 2006-230032
[Patent Document 3] International Publication No. W02006-022365
[Patent Document 4] U.S. Pat. Appln. Publication No. 2009-0072629
[Patent Document 5] U.S. Pat. Appln. Publication No. 2009-0015075
[Patent Document 6] Jpn. Pat. Appln. Laid-Open Publication No. 2006-74848
[Patent Document 7] Jpn. Pat. Appln. Laid-Open Publication No. 2008-288889

The present inventor considers that it is necessary to provide a mechanism for generating a desired output voltage waveform at the power receiving side regardless of a drive frequency at the power feeding side in order to increase availability of wireless power feeding. For example, in order to generate an output voltage of 50 Hz or 60 Hz which is a commercial frequency, it is more rational to adjust the frequency of received power to the commercial frequency band than to adjust the drive frequency of the feeding side to the commercial frequency band. This is because it is desirable to feed power at a drive frequency close to a resonance frequency in terms of power transmission efficiency. Further, in the case where power needs to be fed simultaneously from one wireless power feeder to a plurality of wireless power receivers, it is more rational to individually adjust the output voltage waveforms at the receiving sides.

A main object of the present invention is to control a voltage waveform of an output voltage at the receiving side in wireless power feeding of a magnetic field resonance type.

### SUMMARY

A wireless power receiver according to the present invention receives, at a receiving coil, AC power fed from a feeding coil by wireless using a magnetic field resonance phenomenon between the feeding coil and receiving coil. The wireless power receiver includes: a receiving coil circuit that includes the receiving coil and a capacitor; and a loading circuit that includes a loading coil that is magnetically coupled to the receiving coil to receive the AC power from the receiving coil and an adjustment circuit that adjusts an output voltage. The adjustment circuit includes: a reference signal generation circuit that generates a reference signal at a predetermined reference frequency; and a control signal generation circuit that receives an input signal including a frequency component lower than the reference frequency and generates a control signal representing a magnitude relation between the signal level of the reference signal and that of the input signal and adjusts the output voltage based on the control signal.

The control signal generation circuit may measure the signal level of the input signal based on the signal level of the reference signal and represent the measurement result by a signal component of the control signal. The adjustment circuit may change the output voltage based on the control signal. With such control method, it is possible to control the voltage waveform of the output voltage at the power receiving side in wireless power feeding.

The control signal generation circuit may change the duty ratio of the control signal based on a magnitude relation between the signal level of the reference signal and that of the input signal.

The adjustment circuit may include a DC circuit that generates DC voltage from the AC power and change the DC voltage based on the control signal to generate the output voltage.

The adjustment circuit may include first and second current paths and make first and second switches connected in series respectively to the first and second current paths alternately turn conductive depending on the state of the control signal to generate the output voltage from the DC voltage. The adjustment circuit may make the first and second switches turn conductive/non-conductive in a complementary manner based on the control signal.

The input signal may be a sine-wave signal having a commercial frequency band. In such a case, amplifying the input signal makes it easy to generate an output voltage available as a commercial power supply.

A wireless power transmission system according to the present invention includes: one of the above various wireless power receivers; the feeding coil; and a power supply circuit that supplies the AC power to the feeding coil.

The power supply circuit may feed AC power from a feeding coil that does not substantially resonate with a circuit element at the power feeding side to the receiving coil. The "does not substantially resonate" mentioned here means that the resonance of the feeding coil is not essential for the wireless power feeding, but does not mean that even an accidental resonance of the feeding coil with some circuit element is eliminated. A configuration may be possible in which the feeding coil does not constitute a resonance circuit that resonates with a power feeding side circuit element at a resonance point corresponding to the resonance frequency of the receiving coil. Further, a configuration may be possible in which a capacitor is not inserted in series or in parallel to the feeding coil.

It is to be noted that any arbitrary combination of the above-described structural components and expressions changed between a method, an apparatus, a system, etc. are all effective as and encompassed by the present embodiments.

According to the present invention, it is possible to control the voltage waveform of the output voltage at the receiving side in a wireless power feeding of a magnetic field resonance type.

### BRIEF DESCRIPTION OF THE DRAWINGS

The above features and advantages of the present invention will be more apparent from the following description of certain preferred embodiments taken in conjunction with the accompanying drawings, in which:
FIG. 1 is a view illustrating operation principle of a wireless power transmission system according to a first embodiment of the present invention;
FIG. 2 is a system configuration view of the wireless power transmission system according to the first embodiment;
FIG. 3 is a time chart illustrating a relationship between an input signal and a reference signal;
FIG. 4 is a time chart illustrating a relationship among the input signal, reference signal, and control signal in a high region;
FIG. 5 is a time chart illustrating a relationship among the input signal, reference signal, and control signal in an intermediate region;
FIG. 6 is a time chart illustrating a relationship among the input signal, reference signal, and control signal in a low region;
FIG. 7 is a time chart illustrating a relationship between the input signal and output voltage;
FIG. 8 is a view illustrating another example of an input signal waveform;
FIG. 9 is a view illustrating operation principle of a wireless power transmission system according to a second embodiment of the present invention; and
FIG. 10 is a system configuration view of the wireless power transmission system according to the second embodiment.

### DETAILED DESCRIPTION OF THE EMBODIMENTS

Preferred embodiments of the present invention will be described below with reference to the accompanying drawings.

### [First Embodiment]

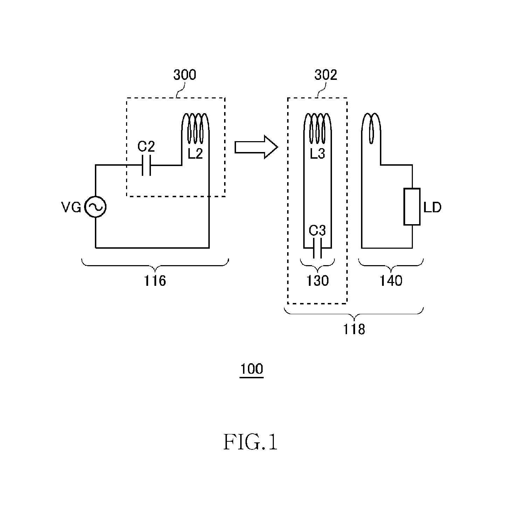

FIG. 1 is a view illustrating operation principle of a wireless power transmission system 100 according to a first embodiment. The wireless power transmission system 100 includes a wireless power feeder 116 and a wireless power receiver 118. The wireless power feeder 116 includes a power feeding LC resonance circuit 300. The wireless power receiver 118 includes a receiving coil circuit 130 and a loading circuit 140. A power receiving LC resonance circuit 302 is formed by the receiving coil circuit 130.

The power feeding LC resonance circuit 300 includes a capacitor C2 and a feeding coil L2. The power receiving LC resonance circuit 302 includes a capacitor C3 and a receiving coil L3. The values of the capacitor C2, power feeding coil L2, capacitor C3, and power receiving coil L3 are set such that the resonance frequencies of the power feeding LC resonance circuit 300 and power receiving LC resonance circuit 302 coincide with each other in a state where the power feeding coil L2 and power receiving coil L3 are disposed away from each other far enough to ignore the magnetic field coupling therebetween. This common resonance frequency is assumed to be fr0.

In a state where the power feeding coil L2 and power receiving coil L3 are brought close to each other in such a degree that they can be magnetic-field-coupled to each other, a new resonance circuit is formed by the power feeding LC resonance circuit 300, power receiving LC resonance circuit 302, and mutual inductance generated between them. The new resonance circuit has two resonance frequencies fr1 and fr2 (fr1 < fr0 < fr2) due to the influence of the mutual inductance. When the wireless power feeder 116 supplies AC power from a power feeding source VG to the power feeding LC resonance circuit 300 at the resonance frequency fr1, the power feeding LC resonance circuit 300 constituting a part of the new resonance circuit resonates at a resonance point 1 (resonance frequency fr1). When the power feeding LC resonance circuit 300 resonates, the power feeding coil L2 generates an AC magnetic field of the resonance frequency fr1. The power receiving LC resonance circuit 302 constituting a part of the new resonance circuit also resonates by receiving the AC magnetic field. When the power feeding LC resonance circuit 300 and power receiving LC resonance circuit 302 resonate at the same resonance frequency fr1, wireless power feeding from the power feeding coil L2 to power receiving coil L3 is performed with the maximum power transmission efficiency. Received power is taken from a load LD of the wireless power receiver 118 as output power. Note that the new resonance circuit can resonate not only at the resonance point 1 (resonance frequency fr1) but also at a resonance point 2 (resonance frequency fr2).

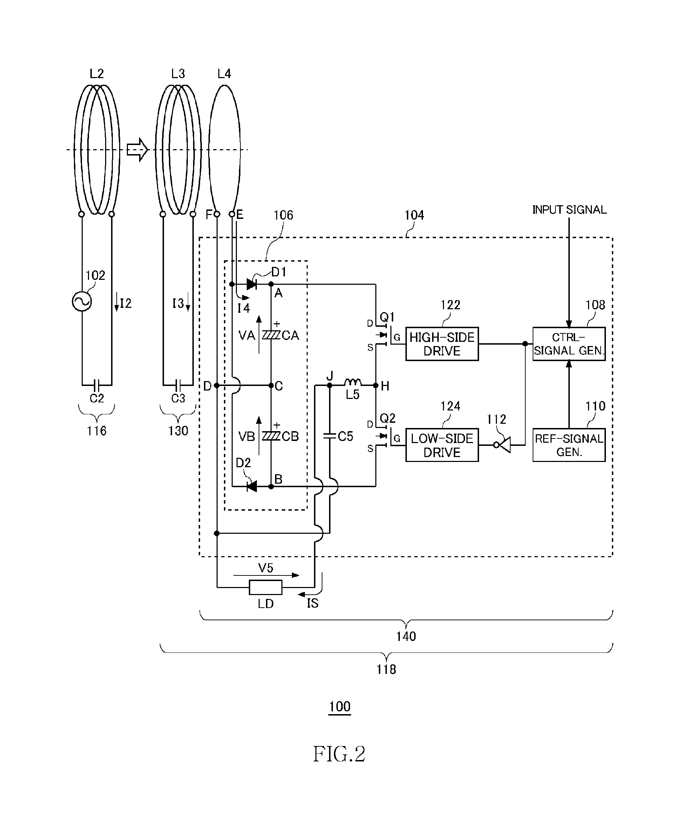

FIG. 2 is a system configuration view of the wireless power transmission system 100 according to the first embodiment. The wireless power transmission system 100 includes a feeding-side wireless power feeder 116 and a receiving-side wireless power receiver 118. The wireless power feeder 116 includes an AC power supply 102, a capacitor C2, and a feeding coil L2. The wireless power feeder 116 illustrated in FIG. 2 has a simple configuration in which the wireless power feeder 116 directly drives the feeding coil L2 without intervention of an exciting coil. The wireless power receiver 118 includes a receiving coil circuit 130 and a loading circuit 140.

A distance (hereinafter, referred to as "inter-coil distance") of about 0.2 m to 1.0 m is provided between a power feeding coil L2 of the wireless power feeder 116 and a power receiving coil L3 of the receiving coil circuit 130. The wireless power transmission system 100 mainly aims to feed power from the power feeding coil L2 to power receiving coil L3 by wireless. In the first embodiment, a description will be made assuming that resonance frequency fr1 is 100 kHz. The wireless power transmission system of the present embodiment may be made to **operate in** a high-frequency band like ISM (Industry-Science-Medical) frequency band. A low frequency band is advantageous over a high frequency band in reduction of cost of a switching transistor (to be described later) and reduction of switching loss. In addition, the low frequency band is less constrained by Radio Act.

The number of windings of the feeding coil L2 is 7, diameter of a conductive wire thereof is 5 mm, and shape of the feeding coil L2 itself is a square of 280 mm x 280 mm. The values of the feeding coil L2 and capacitor C2 are set such that the resonance frequency fr1 is 100 kHz. In FIG. 2, the feeding coil L2 is represented by a circle for descriptive purpose. Other coils are also represented by circles for the same reason. All the coils illustrated in FIG. 2 are made of copper. AC current I2 flows in the wireless power feeder 116.

The receiving coil circuit 130 is a circuit in which a power receiving coil L3 and a capacitor C3 are connected in series. The power feeding coil L2 and power receiving coil L3 face each other. The number of windings of the power receiving coil L3 is 7, diameter of a conductive wire is 5 mm, and shape of the power receiving coil L3 itself is a square of 280 mm x 280 mm. The values of the power receiving coil L3 and capacitor C3 are set such that the resonance frequency fr1 of the receiving coil circuit 130 is also 100 kHz. Thus, the power feeding coil L2 and power receiving coil L3 need not have the same shape. When the power feeding coil L2 generates a magnetic field at the resonance frequency fr1 = 100kHz, the power feeding coil L2 and power receiving coil L3 magnetically resonate, causing large current I3 to flow in the receiving coil circuit 130.

loading circuit 140 has a configuration in which a loading coil L4 is connected to a load LD through an adjustment circuit 104. The receiving coil L3 and loading coil L4 face each other. In the present embodiment, the coil plane of the receiving coil L3 and that of the loading coil L4 are substantially the same. Thus, the receiving coil L3 and loading coil L4 are electromagnetically strongly coupled to each other. The number of windings of the loading coil L4 is 1, diameter of a conductive wire thereof is 5 mm, and shape of the loading coil L4 itself is a square of 300 mm x 300 mm. When the current 13 flows in the receiving coil L3, an electromotive force occurs in the loading circuit 140 to cause AC current 14 to flow in the loading circuit 140. The AC current 14 is rectified by the adjustment circuit 104, and current IS flows in the load LD. The details of the adjustment circuit 104 will be described later.

The AC power fed from the feeding coil L2 of the wireless power feeder 116 is received by the receiving coil L3 of the wireless power receiver 118 and, finally, an output voltage V5 is taken from the load LD.

If the load LD is connected in series to the receiving coil circuit 130, the Q-value of the receiving coil circuit 130 is degraded. Therefore, the receiving coil circuit 130 for power reception and loading circuit 140 for power extraction are separated from each other. In order to enhance the power transmission efficiency, the center lines of the power feeding coil L2, power receiving coil L3, and loading coil L4 are preferably made to coincide with one another.

The adjustment circuit 104 includes a DC circuit 106. Capacitors CA and CB included in the DC circuit 106 are each charged by received power (AC power) and function as a DC voltage source. The capacitor CA is provided between points A and C of FIG. 2, and capacitor CB is provided between points C and B. It is assumed here that the voltage (voltage between points A and C) of the capacitor CA is VA, voltage (voltage between points C and B) of the capacitor CB is VB. Hereinafter, VA+VB (voltage between points A and B) is referred to as "DC power supply voltage".

The current 14 flowing in the loading coil L4 is AC current and therefore it flows alternately in a first path and a second path. The first path starts from an end point E of the loading coil L4, passes through the diode D1, point A, capacitor CA, point C, and point D in this order, and returns to an end point F of the loading coil L4. The second path, which is a reverse path of the first path, starts from the end point F of the loading coil L4, passes through the point D, point C, capacitor CB, point B, and diode D2 in this order, and returns to the end point E of the loading coil L4. As a result, the capacitors CA and CB are each charged by received power.

The point A is connected to the drain of a switching transistor Q1, and the point B is connected to the source of a switching transistor Q2. The source of the switching transistor Q1 and drain of the switching transistor Q2 are connected at a point H. The point H is connected to the point D through an inductor L5, a point J, and a capacitor C5. The point J at which the inductor L5 and capacitor C5 are connected is connected to one end of the load LD, and the other end of the load LD is connected to the point D.

The switching transistors Q1 and Q2 are enhancement type MOSFET (Metal Oxide Semiconductor Field effect transistor) having the same characteristics but may be other transistors such as a bipolar transistor. Further, other switches such as a relay switch may be used in place of the transistor.

When the switching transistor Q1 is turned conductive (ON), the switching transistor Q2 is turned non-conductive (OFF). A concrete control method will be described later. A main current path (hereinafter, referred to as "high current path") at this time starts from the positive electrode of the capacitor CA, passes through the point A, switching transistor Q1, point H, inductor L5, point J, load LD, and point D in this order, and returns to the negative electrode of the capacitor CA. The switching transistor Q1 functions as a switch for controlling conduction/non-conduction of the high current path.

When the switching transistor Q2 is turned conductive (ON), the switching transistor Q1 is turned non-conductive (OFF). A main current path (hereinafter, referred to as "low current path") at this time starts from the positive electrode of the capacitor CB, passes through the point C, point D, load LD, point J, inductor L5, switching transistor Q2, and point B in this order, and returns to the negative electrode of the capacitor CB. The switching transistor Q2 functions as a switch for controlling conduction/non-conduction of the low current path.

The current IS flowing in the load LD is AC current. The direction of the current IS flowing in the high current path is assumed to be the positive direction, and direction of the current IS flowing in the low current path is assumed to be the negative direction.

The adjustment circuit 104 further includes a control signal generation circuit 108, a reference signal generation circuit 110, an inverter 112, a high-side drive 122, and a low-side drive 124. An input signal is supplied to the control signal generation circuit 108. The input signal may assume arbitrary voltage waveform. The adjustment circuit 104 uses the capacitors CA and CB as DC voltage sources and supplies the output voltage V5 obtained by amplifying the input signal to the load LD. It is assumed in the present embodiment that in order to generate 50 Hz sine-wave output voltage V5 which is a commercial frequency, a 50 Hz sine-wave input signal is supplied to the control signal generation circuit 108. Further, it is assumed that the DC power source voltage is set to 141 (V) or more in order to make the effective value of the output voltage V5 be 100 (V).

The reference signal generation circuit 110 generates a reference signal having a higher frequency (hereinafter, referred to as "reference frequency") than the frequency (hereinafter, referred to as "signal frequency") of the input signal. The reference signal used in the present embodiment is a 20 kHz triangle-wave AC signal.

he control signal generation circuit 108 generates a control signal representing a magnitude relation between the input signal and reference signal. The control signal is a rectangular wave AC signal whose duty ratio changes depending on the magnitude relation between the input signal and reference signal. The detail will be described later.

The high-side drive 122 and low-side drive 124 are each a photocoupler inserted for physically isolating the control signal generation circuit 108 and switching transistors Q1, Q2. When a control signal assumes a high level, the switching transistor Q1 is turned ON through the high-side drive 122. At this time, the inverter 112 inverts the control signal, so that the switching transistor Q2 is turned OFF. When a control signal assumes a low level, the switching transistor Q1 is turned OFF. At this time, the inverter 112 inverts the low-level control signal, so that the switching transistor Q2 is turned ON. Thus, the switching transistors Q1 and Q2 are turned conductive/non-conductive in a complementary manner.

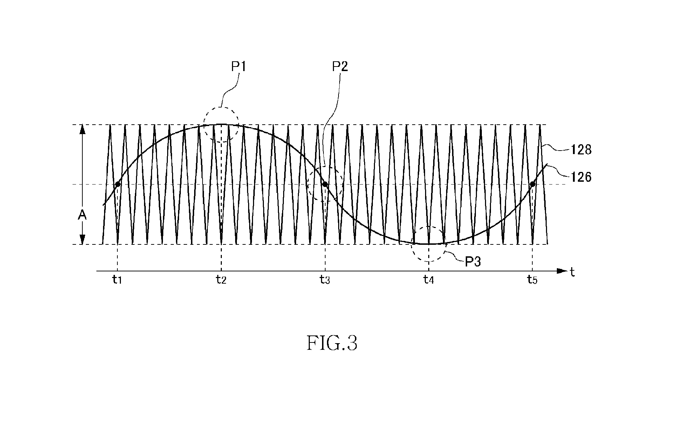

FIG. 3 is a time chart illustrating a relationship between the input signal and reference signal. A time period from time t1 to time t5 corresponds to one cycle of the input signal 126. The input signal 126 in the present embodiment is a sine-wave AC signal at a signal frequency of 50 Hz, so that one cycle corresponds to 20 msec. The reference signal 128 is a triangle-wave AC signal at a reference frequency of 20 kHz, so that one cycle corresponds to 50 µsec. In FIG. 3, for descriptive purpose, the period of the reference signal 128 is increased in some degree. The amplitude of the reference signal 128 is preferably not less than the amplitude of the input signal 126. In the present embodiment, the amplitude of the input signal 126 and that of the reference signal 128 are equal to each other. The input signal 126 and reference signal 128 each have only a positive component.

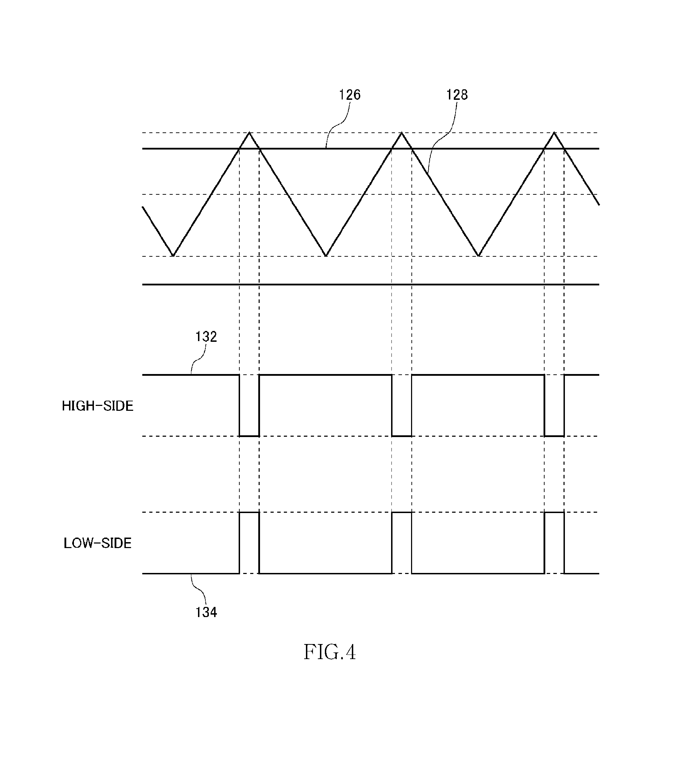

The control signal generation circuit 108 compares the above input signal 126 and reference signal 128 to change the duty ratio of the control signal according to need. Hereinafter, with reference to FIGS. 4 to 6, a description will be made of a relationship among the input signal 126, reference signal 128, and control signal in each of a high region P1 where the input signal 126 is near the maximum value, an intermediate region P2 where the input signal 126 is near the intermediate value, and a low region P3 where the input signal 126 is near the minimum value.

FIG. 4 is a time chart illustrating a relationship among the input signal, reference signal, and control signal in the high region P1.FIG. 4 is a time chart obtained by enlarging the vicinity of the high region P1 of FIG. 3 in the time direction. Since the signal level of the input signal 126 is high in the high region P1, the signal level of the input signal 126 is higher than that of the reference signal 128 for most of the period of time. The control signal generation circuit 108 compares the input signal 126 and reference signal 128. Then, when the input signal 126 is higher than the reference signal 128 (input signal 126 > reference signal 128), the control signal generation circuit 108 outputs a high-level control signal. When the input signal is not higher than the reference signal 128 (input signal 126 ≤ reference signal 128), the control signal generation circuit 108 outputs a low-level control signal. The output control signal is supplied to the gate of the switching transistor Q1 as a high-side control signal 132 . At the same time, the output control signal is inverted by the inverter 112 to be supplied to the switching transistor Q2 as a low-side control signal 134.

The duty ratio of the high-side control signal 132 becomes 50 % or more and the duty ratio of the low-side control signal 134 becomes less than 50 %, so that the period in which the switching transistor Q1 is ON is longer than the period in which the switching transistor Q2 is ON. The current IS controlled by the high-side control signal 132 and low-side control signal 134 is integrated by the inductor L5 and capacitor C5 to be averaged. As a result, the current IS at the load LD flows more easily in the positive direction, and output voltage V5 assumes a positive value.

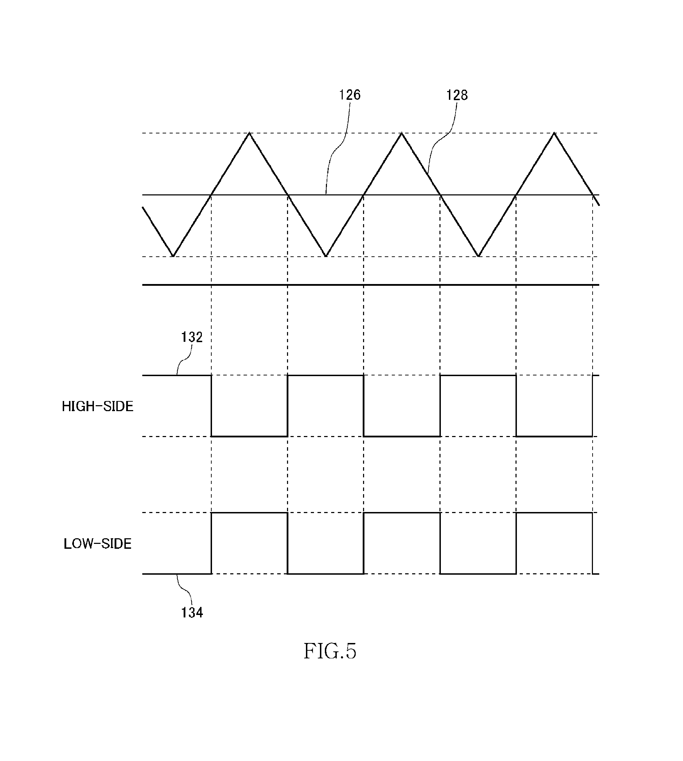

FIG. 5 is a time chart illustrating a relationship among the input signal, reference signal, and control signal in the intermediate region P2. FIG. 5 is a time chart obtained by enlarging the vicinity of the intermediate region P2 of FIG. 3 in the time direction. In the intermediate region P2, the signal level of the input signal 126 assumes the intermediate level of the reference signal 128. The duty ratio of the high-side control signal 132 becomes near 50 % and the duty ratio of the low-side control signal 134 also becomes near 50 %, so that the period in which the switching transistor Q1 is ON and period in which the switching transistor Q2 is ON balance each other. As a result, the output voltage V5 of the load LD is near zero.

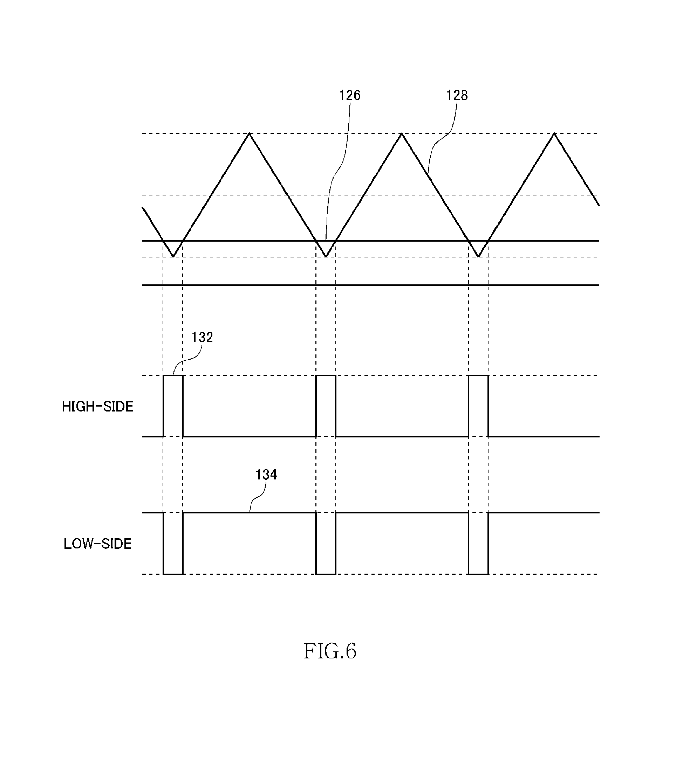

FIG. 6 is a time chart illustrating a relationship among the input signal, reference signal, and control signal in the low region P3. FIG. 6 is a time chart obtained by enlarging the vicinity of the low region P3 of FIG. 3 in the time direction. Since the signal level of the input signal 126 is low in the low region P3, the signal level of the input signal 126 is lower than that of the reference signal 128 for most of the period of time.

The duty ratio of the high-side control signal 132 becomes 50 % or less and the duty ratio of the low-side control signal 134 becomes 50 % or more, so that the period in which the switching transistor Q1 is ON is shorter than the period in which the switching transistor Q2 is ON. As a result, the current IS at the load LD flows more easily in the negative direction, and output voltage V5 assumes a negative value.

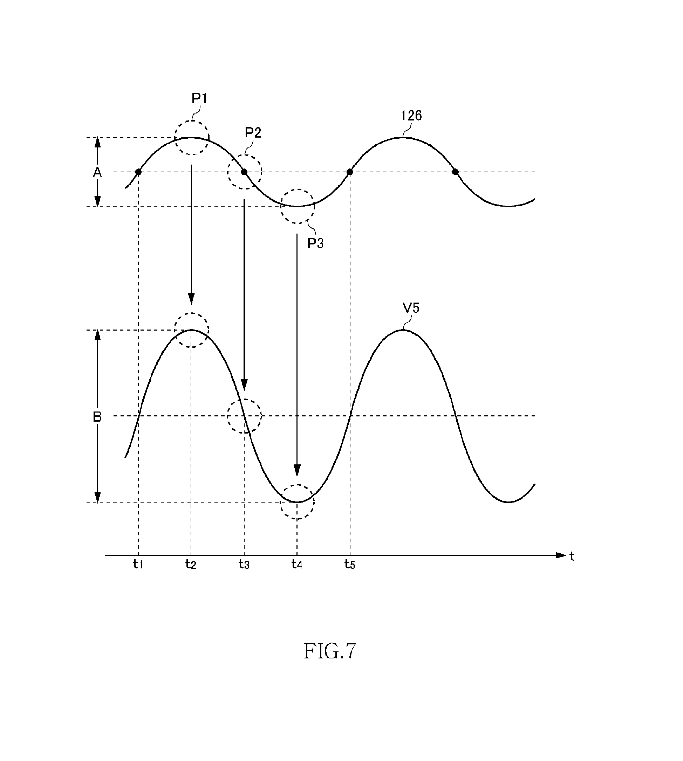

FIG. 7 is a time chart illustrating a relationship between the input signal 126 and output voltage V5. The output voltage V5 has a voltage waveform obtained by amplifying the input signal 126. The signal level of the input signal 126 is periodically measured comparing with the reference signal 128, the duty ratio of the control signal is made to appropriately change in accordance with the measurement result, and the voltage level of the output voltage V5 is controlled based on the change in the duty ratio. When an amplitude B of the output voltage V5 is set to 141 (V), AC voltage having a commercial frequency of 50 Hz and an effective value of 100 (V) can be generated at the wireless power receiver 118 side. Thus, even when AC power near the resonance frequency fr1 = 100 kHz is received by the receiving coil L3, output voltage V5 available as a commercial power supply can be generated.

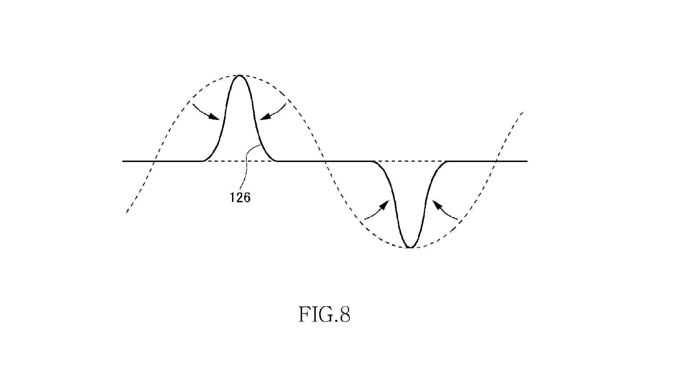

FIG. 8 is a view illustrating another example of the input signal waveform. The input signal 126 need not be a sine-wave signal. For example, when the waveform width of the input signal 128 is reduced as illustrated in FIG. 8, power output from the load LD can be suppressed. Assuming that the input signal 126 is an audio signal, the wireless power transmission system 100 functions as an audio amplifier. The audio signal is amplified and output as the output voltage V5.

### [Second Embodiment]

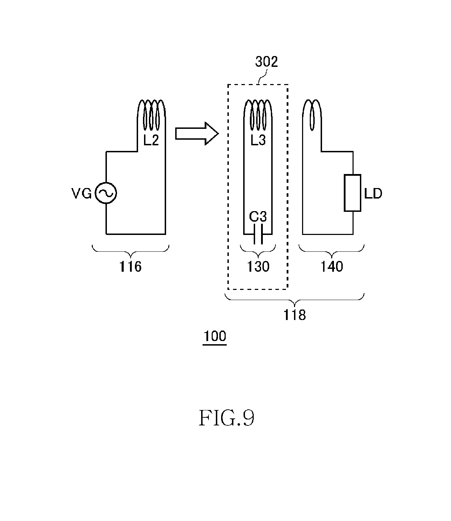

FIG. 9 is a view illustrating operation principle of the wireless power transmission system 100 according to a second embodiment. As in the case of the first embodiment, the wireless power transmission system 100 according to the second embodiment includes the wireless power feeder 116 and wireless power receiver 118. However, although the wireless power receiver 118 includes the power receiving LC resonance circuit 302, the wireless power feeder 116 does not include the power feeding LC resonance circuit 300. That is, the power feeding coil L2 does not constitute a part of the LC resonance circuit. More specifically, the power feeding coil L2 does not form any resonance circuit with other circuit elements included in the wireless power feeder 116. No capacitor is connected in series or in parallel to the power feeding coil L2. Thus, the power feeding coil L2 does not resonate in a frequency at which power transmission is performed.

The power feeding source VG supplies AC current of the resonance frequency fr1 to the power feeding coil L2. The power feeding coil L2 does not resonate but generates an AC magnetic field of the resonance frequency fr1.The power receiving LC resonance circuit 302 resonates by receiving the AC magnetic field. As a result, large AC current flows in the power receiving LC resonance circuit 302. Studies conducted by the present inventor have revealed that formation of the LC resonance circuit is not essential in the wireless power feeder 116. The power feeding coil L2 does not constitute a part of the power feeding LC resonance circuit, so that the wireless power feeder 116 does not resonate at the resonance frequency fr1. It has been generally believed that, in the wireless power feeding of a magnetic field resonance type, making resonance circuits which are formed on both the power feeding side and power receiving side resonate at the same resonance frequency fr1 (= fr0) allows power feeding of large power. However, it is found that even in the case where the wireless power feeder 116 does not contain the power feeding LC resonance circuit 300, if the wireless power receiver 118 includes the power receiving LC resonance circuit 302, the wireless power feeding of a magnetic field resonance type can be achieved.

Even when the power feeding coil L2 and power receiving coil L3 are magnetic-field-coupled to each other, a new resonance circuit (new resonance circuit formed by coupling of resonance circuits) is not formed due to absence of the capacitor C2. In this case, the stronger the magnetic field coupling between the power feeding coil L2 and power receiving coil L3, the greater the influence exerted on the resonance frequency of the power receiving LC resonance circuit 302. By supplying AC current of this resonance frequency, that is, a frequency near the resonance frequency fr1 to the power feeding coil L2, the wireless power feeding of a magnetic field resonance type can be achieved. In this configuration, the capacitor C2 need not be provided, which is advantageous in terms of size and cost.

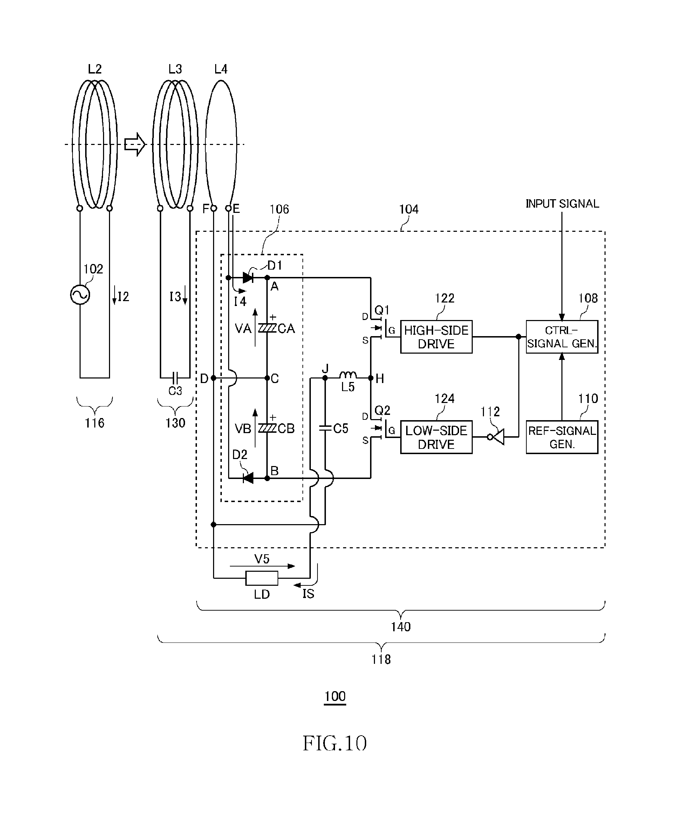

FIG. 10 is a system configuration view of the wireless power transmission system 100 according to the second embodiment. In the wireless power transmission system 100 of the second embodiment, the capacitor C2 is omitted. Other points are the same as the first embodiment.

The wireless power transmission system 100 has been described based on the embodiments. According to the wireless power transmission system 100, it is possible to control the output voltage V5 of the load LD based on the waveform of an input signal supplied to the power receiving side. Thus, even when the power feeding side adjusts the drive frequency of the AC power supply 102 for maximum power efficiency, the power receiving side can stably generate a desired output voltage V5 from received power.

The above embodiments are merely illustrative of the present invention and it will be appreciated by those skilled in the art that various modifications may be made to the components of the present invention and a combination of processing processes and that the modifications are included in the present invention.

The reference signal generated by the reference signal generation circuit 110 may be an AC signal having not only a triangle wave but also a saw-tooth waveform, a sine wave, or a rectangular wave. Although the duty ratio of the control signal represents the signal level of an input signal in the above embodiments, the signal level of an input signal may be represented by the amplitude or frequency of the control signal. Further, the process in which received power is converted into DC voltage by the DC circuit 106 is not essential. For example, the received AC power may be controlled by the control signal so as to control the output voltage V5.

The "AC power" used in the wireless power transmission system 100 may be transmitted not only as an energy but also as a signal. Even in the case where an analog signal or digital signal is fed by wireless, the wireless power transmission method of the present invention may be applied.

## Claims

1. A wireless power receiver that receives, at a receiving coil, AC power fed from a feeding coil by wireless using a magnetic field resonance phenomenon between the feeding coil and the receiving coil, the receiver comprising:
a receiving coil circuit that includes the receiving coil
and a capacitor; and
a loading circuit that includes a loading coil that is magnetically coupled to the receiving coil to receive the AC power from the receiving coil and an adjustment circuit that adjusts an output voltage,
the adjustment circuit including:
a reference signal generation circuit that generates a reference signal at a predetermined reference frequency;
and
a control signal generation circuit that receives an input signal including a frequency component lower than the reference frequency and generates a control signal representing a magnitude relation between the signal level of the reference signal and that of the input signal, and
adjusting the output voltage based on the control signal.

2. The wireless power receiver according to claim 1,
wherein
the control signal generation circuit changes the duty ratio of the control signal based on a magnitude relation between the signal level of the reference signal and that of the input signal.

3. The wireless power receiver according to claim 1 or claim 2, wherein
the adjustment circuit includes a DC circuit that generates DC voltage from the AC power and changes the DC voltage based on the control signal to generate the output voltage.

4. The wireless power receiver according to claim 3,
wherein
the adjustment circuit includes first and second current paths and makes first and second switches connected in series respectively to the first and second current paths alternately turn conductive depending on the state of the control signal to generate the output voltage from the DC voltage.

5. The wireless power receiver according to claim 4,
wherein
the adjustment circuit makes the first and second switches turn conductive/non-conductive in a complementary manner based on the control signal.

6. The wireless power receiver according to any of claims 1 to 5, wherein
the input signal is a sine-wave signal at a commercial frequency band.

7. A wireless power transmission system comprising:
the wireless power receiver as claimed in any of claims 1 to 6;
the feeding coil; and
a power supply circuit that supplies the AC power to the feeding coil.

8. The wireless power transmission system according to claim 7, wherein
the power supply circuit feeds the AC power from the feeding coil that does not substantially resonate with a circuit element at the power feeding side to the receiving coil.

9. The wireless power transmission system according to claim 7, wherein
the feeding coil does not constitute a resonance circuit that resonates with a power feeding side circuit element at a resonance point corresponding to the resonance frequency of the receiving coil.

10. The wireless power transmission system according to claim 7, wherein
a capacitor is not inserted in series or in parallel to the feeding coil.
